# EUROPÄISCHE PATENTSCHRIFT

(11) **EP 1 861 176 B1**
(45) Veröffentlichungstag und Bekanntmachung des Hinweises auf die Patenterteilung: **26.05.2010**
(21) Anmeldenummer: 06725168.6
(22) Anmeldetag: 20.03.2006
(51) Int. Cl.: A62C 35/68, F16K 5/06

(54) **SERVICEFREUNDLICHES VENTIL FÜR BRANDBEKÄMPFUNGSSYSTEME**
EASY-MAINTENANCE VALVE FOR FIRE FIGHTING SYSTEMS
VALVE D'ENTRETIEN FACILE DESTINEE A DES SYSTEMES DE LUTTE CONTRE UN INCENDIE

(30) Priorität: 24.03.2005 DE 102005014275
(43) Veröffentlichungstag der Anmeldung: 05.12.2007
(73) Patentinhaber: Fogtec Brandschutz GmbH & Co. KG, 51063 Köln (DE)
(72) Erfinder: SPRAKEL, Dirk, 50996 Köln (DE); KOPP, Rüdiger, 50937 Köln (DE)
(74) Vertreter: Cohausz & Florack
(86) Internationale Anmeldenummer: PCT/EP2006/060877
(87) Internationale Veröffentlichungsnummer: WO 2006/100221

(56) Entgegenhaltungen:
- US-A- 5 103 862
- US-A- 5 967 239
- US-B1- 6 196 262

## Beschreibung

Die Erfindung betrifft ein Ventil für Rohrleitungen von Brandbekämpfungssystemen mit einer Zuleitung für mit Überdruck beaufschlagtes Löschfluid, mit einer Ableitung für das Löschfluid, mit zwischen der Zuleitung und der Ableitung angeordneten Sperrmitteln, und mit einem die Sperrmittel betreibenden Stellmittel zum Stellen der Sperrmittel in eine offene Position und eine geschlossene Position, wobei im Ruhezustand die Sperrmittel in der geschlossenen Position sind und wobei in einem Brandfall die Stellmittel die Sperrmittel aus der geschlossenen Position in die offene Position verstellen, derart, dass Löschfluid von der Zuleitung in die Ableitung fließt.

Rohrleitungen von Brandbekämpfungssystemen sind regelmäßig bereits im Ruhezustand mit Löschfluid beaufschlagt. Diese so genannten Nass-Systeme zeichnen sich dadurch aus, dass Löschfluid in den Rohrleitungen permanent gelagert ist und im Brandfall das Löschfluid schnell an den Sprinklern bzw. Löschnebeldüsen anliegt.

Um zu verhindern, dass Löschfluid im Ruhezustand aus dem Rohrleitungssystem austritt, ist vor Löschnebeldüsen bzw. an Abzweigungen in den Rohrleitungssystemen ein Absperrventil angeordnet. Dieses Ventil verhindert, dass Löschfluid unmittelbar an den Löschnebeldüsen anliegt. Im Brandfall werden die Ventile über ferngesteuerte Stellmotoren geöffnet, so dass Löschfluid aus den Löschnebeldüsen austritt.

Zur Erkennung von Leckagen wird das Löschfluid im Ruhezustand permanent auf einem niedrigen Standby-Druck gehalten. Dieser Druck beträgt regelmäßig ca. 20 bar. Im Brandfall wird der Fluiddruck stark erhöht, so dass beispielsweise an den Löschnebeldüsen Feinstnebel vernebelt werden kann.

Um sicher zu stellen, dass die Ventile im Brandfall auch funktionieren, müssen diese in regelmäßigen Abständen gewartet werden. Zur Wartung der Ventile werden diese aktiviert. Hierbei werden Kugelhähne beispielsweise um zumindest 90° gedreht. Dadurch werden Inkrustationen, eingebrachte Fremdkörper, aufgequollene Dichtungen, beschädigte Dichtungen, Korrosionen und weitere Ursachen für ein Festsitzen der Ventile entdeckt. Ein Festsitzen oder andere Fehlfunktionen der Ventile müssen frühzeitig festgestellt werden, um einen sicheren Betrieb im Brandfall gewährleisten zu können. Ein solches bekanntes Ventil wird in US-B1- 6 196 262 beschrieben.

Bei den herkömmlichen Wartungsarbeiten werden die Ventile regelmäßig geöffnet. Hierzu bedient ein Service Techniker ein Absperrventil mit einem seitlichen Abgang. Ein Testventil wird manuell geöffnet und Löschfluid tritt über den seitlichen Abgang aus. Danach werden die Ventile wieder manuell in ihre ursprüngliche Position gebracht. Die Wartung führt dazu, dass regelmäßig Löschfluid neu in die Rohrleitung eingebracht und der Ruhedruck nachgeregelt werden muss. Das Austreten von Löschfluid bei Wartungsarbeiten kann ferner nachteilig sein, wenn in den abgesicherten Räumen feuchtigkeitsempfindliche Gegenstände aufbewahrt werden.

Auf Grund dieser Nachteile lag der Erfindung die Aufgabe zugrunde, ein Ventil für Rohrleitungen von Brandbekämpfungssystemen zur Verfügung zu stellen, bei dem ein Festsitzen erkannt werden kann, ohne dass Löschfluid aus der Rohrleitung austritt.

Insbesondere ist es möglich, über eine Fernwartung, bei der die Überwachung räumlich von den Ventilen getrennt angeordnet ist, die Sperrmittel zu warten. Vor allem in Tunneln von mehreren Kilometern Länger ist es sinnvoll, die Wartung der Ventile zentral zu steuern, so dass es nicht notwendig ist, dass ein Servicetechniker manuell alle Sperrmittel einzeln kontrolliert.

Die zuvor aus dem Stand der Technik hergeleitete Aufgabe wird erfindungsgemäß dadurch gelöst, dass die Sperrmittel derart gebildet sind, dass in einem Wartungsbetrieb die Sperrmittel aus ihrer geschlossen Position mittels der Stellmittel verstellbar sind, derart, dass im Wartungsbetrieb kein Löschfluid von der Zuleitung in die Ableitung fließt.

Es ist erkannt worden, dass ein Festsitzen der Sperrmittel dadurch festgestellt werden kann, dass die Sperrmittel mittels der Stellmittel während einer Wartung verstellt werden. Um das Austreten von Löschfluid während dieses Stellvorgangs im Wartungsbetrieb zu verhindern, sind die Sperrmittel derart vorgesehen, dass diese im Wartungsbetrieb keine Fluidkommunikation zwischen Zuleitung und Ableitung gestatten. Durch das Aufbringen eines Anlaufmoments beim Stellen der Sperrmittel im Wartungsbetrieb werden geringfügige Verkrustungen und Korrosionen aufgebrochen. Die Ventile sind danach wieder voll funktionstüchtig.

Es ist besonders bevorzugt, wenn die Sperrmittel aus einem Kugelhahn gebildet sind, wobei der Kugelhahn zwischen der offen Position und der geschlossen Position eine Wartungsposition hat. Der Kugelhahn kann beispielsweise als 3/2 Wege-Kugelhahn gebildet sein. In diesem Fall kann eine Öffnung des Ventilkörpers verschlossen sein. Bei einem 3/2 Wege-Kugelhahn mit einer verschlossenen Öffnung kann die Kugel selbst mittels der Stellmittel um ca. 180° verdreht werden, ohne dass Löschfluid von der Zuleitung in eine Ableitung gelangt.

Bei einem 3/2 Wege-Kugelhahn kann der Ventilkörper so gestaltet sein, dass die mit dem Ventileingang verbundene Ausgangsbohrung im Falle einer 90° Drehung der Kugel verschlossen ist. Die Kugel des Kugelhahns kann beliebige Bohrmuster aufweisen, die es gestatten, den Kugelhahn in eine Wartungsposition zwischen der offenen Position und der geschlossenen Position zu bringen, ohne dass Löschfluid von der Zuleitung in die Ableitung gelangt.

Ein Festsitzen der Kugel eines Kugelhahns wird insbesondere dann leicht festgestellt, wenn der Kugelhahn im Wartungsbetrieb von den Stellmitteln um zumindest 50°, vorzugsweise zumindest 90° verstellbar ist. Ein Verstellen des Kugelhahns um zumindest 50° gestattet es, zuverlässig ein Festsitzen zu detektieren. Leichte Inkrustationen können aufgebrochen werden und die Funktionsfähigkeit des Kugelhahns kann gewährleistet bleiben.

Die Bohrmuster in der Kugel des Kugelhahns können bevorzugt derart gestaltet sein, dass ein Winkel zwischen einer Einlassöffnung und einer Auslassöffnung des Kugelhahns zwischen 5° und 175°, vorzugsweise 90° ist. Die Anordnung von Öffnungen im Ventilkörper und Bohrungen in der Kugel des Kugelhahns können derart sein, dass sie eine Verstellung des Kugelhahns um zumindest 50° gestatten, ohne dass Löschfluid austritt.

Es ist ebenfalls besonders bevorzugt, wenn die Sperrmittel eine Berstscheibe und einen Absperrhahn aufweisen. Die Berstscheibe ist derart gestaltet, dass sie erst bei einer Erhöhung des Ruhedrucks birst. Dies geschieht beispielsweise bei einem Brandfall. Der Absperrhahn verhindert, dass bei einer unbeabsichtigten Zerstörung der Berstscheibe Löschfluid aus den Löschnebeldüsen austritt. Die Berstscheibe bildet zusammen mit dem Absperrhahn eine doppelte Sicherung gegenüber Leckagen.

Es ist ebenfalls besonders bevorzugt, wenn der Absperrhahn ein Kugelhahn oder ein Magnetventil ist.

Besonders bevorzugt ist es, wenn die Berstscheibe zwischen Zuleitung und Absperrhahn angeordnet ist, derart, dass der Absperrhahn im Ruhezustand trocken ist. In diesem Falle ist die Berstscheibe so angeordnet, dass sie den Absperrhahn im Ruhezustand zuverlässig von der Zuleitung abdichtet. Der Absperrhahn lässt sich in diesem Falle für Wartungsarbeiten verstellen, ohne dass Löschfluid austritt. Das Löschfluid wird durch die Berstscheibe in der Zuleitung gehalten. Erst im Brandfall birst die Berstscheibe und die Stellmittel stellen den Absperrhahn in eine offene Position, so dass zuverlässig ein Brand bekämpft werden kann.

Ebenfalls besonders bevorzugt ist, wenn die Berstscheibe zwischen Absperrhahn und Ableitung angeordnet ist, derart, dass der Absperrhahn im Ruhezustand mit Löschfluid beaufschlagt ist. In diesem Fall verhindert der Absperrhahn, dass die Berstscheibe versehentlich durch einen zu hohen Ruhedruck zerstört wird. Im Brandfall birst die Berstscheibe nach dem Öffnen des Absperrhahns, da ein erhöhter Fluiddruck herrscht. Im Wartungsfall kann der Absperrhahn ohne weiteres durch die Stellmittel geöffnet werden. Die Berstscheibe hält den Ruhedruck zerstörungsfrei aus. Löschfluid tritt nicht aus den Löschnebeldüsen aus, denn es wird durch die Berstscheibe zurückgehalten.

Bevorzugt ist auch, wenn die Stellmittel hydraulisch, pneumatisch oder elektrisch betrieben sind. Solche Stellmittel können beispielsweise elektrisch betriebene Stellmotoren sein.

Die Position der Stellmittel kann mittels Sensoren festgestellt werden. Diese Sensoren können beispielsweise Endlagenschalter und Wartungslagenschalter sein. Diese Schalter überwachen die Steuerung der Stellmittel. Die Sensoren können außerdem den Arbeitsbereich der Stellmittel steuern. Die Sensoren gestatten eine Fernwartung der Sperrmittel mittels Fernsteuerung der Motoren und Überwachung der Motorfunktion bzw. der Position der Stellmittel.

Weitere Vorteile ergeben sich aus den nachgeordneten Ansprüchen.

Nachfolgend wird die Erfindung anhand einer Ausführungsbeispiele zeigenden Zeichnung näher erläutert.

In der Zeichnung zeigen:
- Fig. 1: ein Brandbekämpfungssystem zum Löschen eines Feuers in schematischer Darstellung;
- Fig. 2: eine Variante eines Systems gemäß Fig. 1;
- Fig. 3: ein Ventil mit einer Berstscheibe gemäß eines ersten Ausführungsbeispiels;
- Fig. 4: ein Ventil mit einer Berstscheibe gemäß eines zweiten Ausführungsbeispiels;
- Fig. 5a: ein Ventil mit einem Kugelhahn in einer geschlossenen Position;
- Fig. 5b: ein Ventil mit einem Kugelhahn in einer Wartungsposition;
- Fig. 5c: ein Ventil mit einem Kugelhahn in einer offenen Position.

Die Vorrichtung 1 zum Löschen eines Brandes weist eine Löschfluidversorgung 2 auf, welche im einzelnen nicht gezeigte Fluidbehälter und eine Hochdruckpumpe umfasst. Alternativ kann die Löschfluidversorgung 2 auch mit einem oder mehreren Druckspeichern ausgestattet sein, in welchen Löschfluid unter Druck gespeichert ist. Weiter kann das Löschfluid unter Umgebungsdruck bevorratet und nur im Aktivierungsfall aus einem oder mehreren Druckspeichern mit Druck beaufschlagt werden. Die Löschfluidversorgung 2 wird von einer Steuereinrichtung 3 gesteuert, welche das Brandmeldesignal eines Brandwächters 4 empfängt.

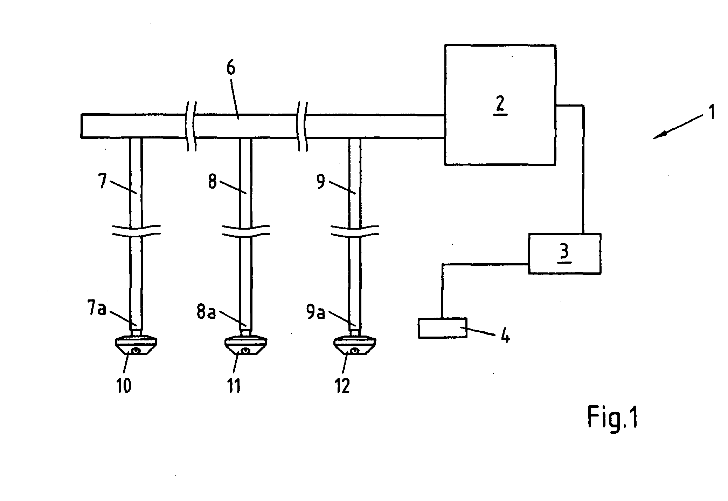

Beim Ausführungsbeispiel gemäß Fig. 1 sind über eine Hauptversorgungsleitung 6 und jeweils eigene, von der Hauptversorgungsleitung 6 abzweigende Versorgungsleitungen 7,8,9 Löschdüsen 10,11,12 an die Löschfluidversorgung 2 angeschlossen.

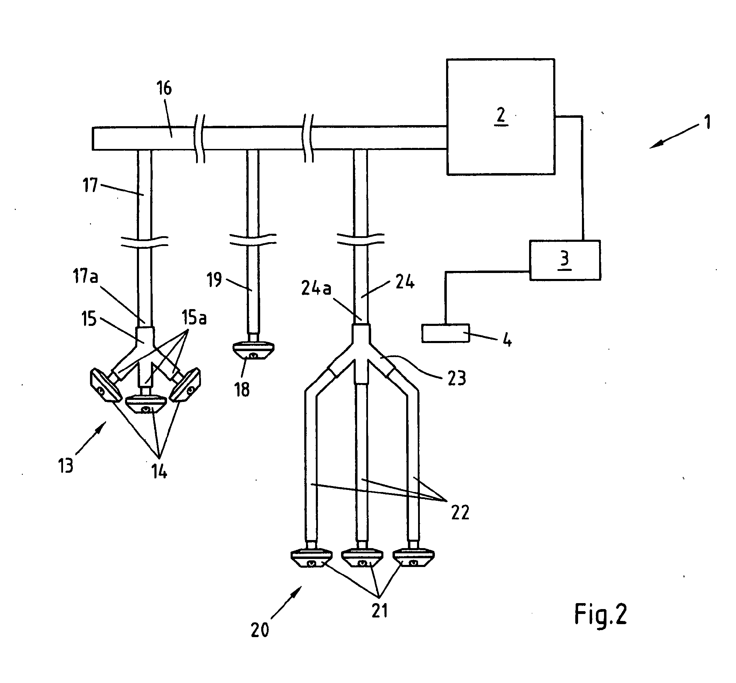

Beim Ausführungsbeispiel gemäß Fig. 2 ist eine erste Gruppe 13 von drei Löschdüsen 14 über ein Verzweigungsstück 15 an eine von einer Hauptversorgungsleitung 16 abgehende Versorgungsleitung 17 angeschlossen. Des Weiteren ist eine einzelne Löschdüse 18 unmittelbar an eine Versorgungsleitung 19 angeschlossen, die ebenfalls von der Hauptversorgungsleitung 16 abgeht. Bei einer dritten Gruppe 20 von drei Löschdüsen 21 sind die Löschdüsen 21 schließlich über Zwischenleitungen 22 und ein Verzweigungsstück 23 an eine dritte, von der Hauptversorgungsleitung 16 abgehende Versorgungsleitung 24 angeschlossen.

Die Löschdüsen 10,11,12,14,18,21 können offene Düseneinsätze aufweisen, welche über in der jeweiligen Löschdüse ausgebildete Kanäle mit einer Einströmbohrung der Löschdüse verbunden sind. Die Düseneinsätze erzeugen bei Beaufschlagung mit einem Löschfluid unter hohem Druck von bis zu 300 bar einen sich fein verteilenden Löschnebel.

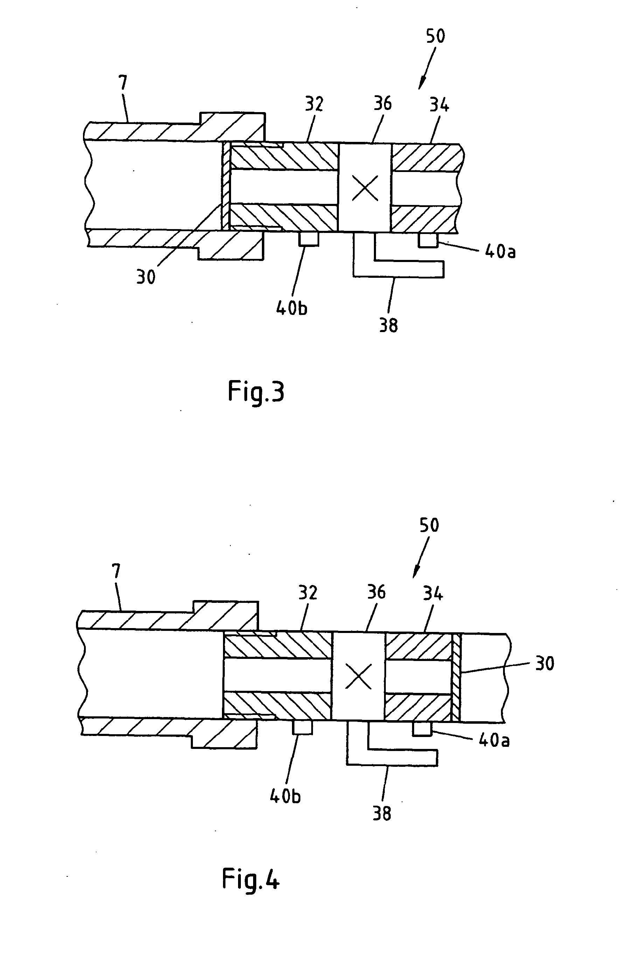

Fig. 3 zeigt ein Ventil 50 gemäß eines ersten vorteilhaften Ausführungsbeispiels. Über die Versorgungsleitung 7 liegt Löschfluid bei einem Ruhedruck von ca. 20 bar an der Zuleitung 32 des Ventils 50 an. Das Ventil 50 weist eine Berstscheibe 30, eine Zuleitung 32, eine Ableitung 34, einen Absperrhahn 36, Stellmittel 38 und Sensoren 40 auf.

Das Löschfluid wird durch die Berstscheibe 30 in der Versorgungsleitung 7 gehalten. Sie dichtet das Ventil 50, insbesondere den Absperrhahn 36 gegenüber dem Löschfluid ab. Im Ruhezustand ist der Absperrhahn 36 trocken. Zur Wartung kann mittels der Stellmittel 38 die Position des Absperrhahns 36 verändert werden. Beispielsweise kann der Absperrhahn 36 durch ein Magnetventil gebildet sein, welches eine offene und eine geschlossene Position hat. Die Stellmittel 38 können ferngesteuert werden.

Mittels der Stellmittel 38 kann zwischen der offenen Position und der geschlossenen Position hin- und hergeschaltet werden. Die Position der Stellmittel 38 wird durch die Sensoren 40 detektiert. Mittels eines Hilfsantriebs (nicht gezeigt) werden die Stellmittel 38 im Wartungsfall von der gezeigten Position über dem Sensor 40a in eine Position über dem Sensor 40b verstellt. Der Sensor 40b detektiert die Verstellung der Stellmittel 38 und meldet dies an eine Steuereinrichtung, so dass die Verstellung gestoppt wird. Danach werden die Stellmittel 38 über den Hilfsantrieb wieder zurück in die gezeigte Position gestellt. Das Erreichen dieser Position wird über den Sensor 40a detektiert. Durch das Verstellen im Wartungsintervall werden Inkrustationen und Korrosionen in den Sperrmitteln 36 festgestellt.

Im Brandfall wird der Fluiddruck erhöht, was dazu führt, dass die Berstscheibe 30 birst. Zusätzlich wird mittels der Stellmittel 38 der Absperrhahn 36 in eine offene Position gestellt, so dass Löschfluid von der Zuleitung 32 in die Ableitung 34 fließen kann und ein Feuer bekämpft werden kann.

Fig. 4 zeigt eine weitere Ausgestaltung eines erfindungsgemäßen Ventils 50. Hierbei ist die Berstscheibe 30 hinter dem Absperrhahn 36 angeordnet. Der Absperrhahn 36 ist im Ruhezustand mit Löschfluid beaufschlagt. Das Verstellen der Stellmittel 38 von der geschlossenen Position in die offene Position bewirkt, dass Löschfluid in der Ableitung 34 an der Berstscheibe 30 anliegt. Die Berstscheibe 30 dichtet die Ableitung 34 von der weiteren Rohrleitung ab, so dass kein Löschfluid austreten kann.

Im Brandfall werden die Stellmittel 38 verstellt, so dass der Absperrhahn 36 in einer offenen Position ist. Das Löschfluid liegt mit erhöhtem Druck an der Berstscheibe 30 an, so dass diese birst und eine Brandbekämpfung erfolgen kann.

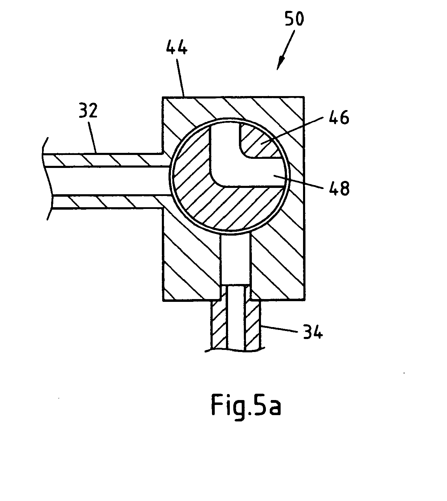

Fig. 5a zeigt einen Kugelhahn 44 in schematischer Darstellung. Der Kugelhahn 44 weist eine Kugel 46 mit einem Durchströmkanal 48 auf. Die Kugel 46 wird über Stellmittel (nicht gezeigt) verstellt. Die Position der Kugel 46 wird mittels Sensoren (nicht gezeigt) detektiert. In der in Fig. 5a gezeigten Position ist die Kugel 46 in einer geschlossenen Position. Der Durchströmkanal 48 der Kugel 46 ist so gestaltet, dass er weder mit der Zuleitung 32 noch mit der Ableitung 34 kommuniziert.

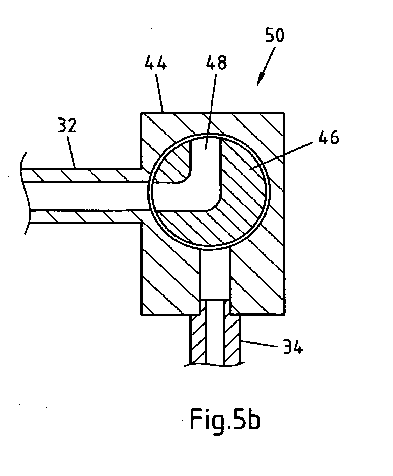

Im Wartungsfall wird die Kugel 46 in die in Fig. 5b gezeigte Position verdreht. Hierbei kommuniziert die Zuleitung 32 mit dem Durchströmkanal 48. Löschfluid kann jedoch nicht in die Ableitung 34 fließen, da keine unmittelbare Verbindung zwischen Zuleitung 32 und Ableitung 34 besteht. Der Kugelhahn 44 dichtet die Zuleitung 32 von der Ableitung 34 ab. Durch das Verdrehen der Kugel 46 des Kugelhahns 44 um 90° kann festgestellt werden, ob die Kugel 46 festsitzt.

Durch das regelmäßige Verstellen der Kugel 46 von der in Fig. 5a gezeigten Position in die in Fig. 5b gezeigte Position kann ein Festsitzen der Kugel 46 festgestellt werden. Im Falle eines Festsitzens kann das Ventil 50 ausgetauscht werden.

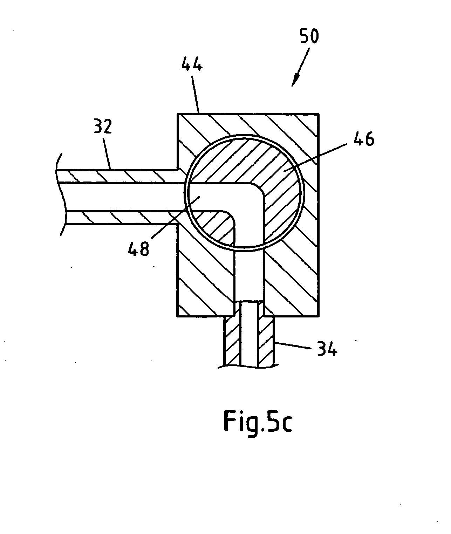

Dadurch, dass die Funktion des Kugelhahns 44 regelmäßig überwacht wird, kann im Brandfall die Kugel 46 ohne Beeinträchtigung in die in Fig. 5c gezeigte Position verdreht werden. In diesem Falle wird durch den Durchströmkanal 48 eine direkte Verbindung zwischen Zuleitung 32 und Ableitung 34 gewährleistet. Löschfluid kann direkt durch den Durchströmkanal 48 in die Ableitung 34 fließen und ein Brand kann wirksam bekämpft werden.

## Patentansprüche

1. Ventil für Rohrleitungen von Brandbekämpfungssystemen (1),
- mit einer Zuleitung (32) für mit Überdruck beaufschlagtes Löschfluid,
- mit einer Ableitung (34) für das Löschfluid,
- mit zwischen der Zuleitung (32) und der Ableitung (34) angeordneten Sperrmitteln (36, 46), und
- mit einem die Sperrmittel (36, 46) betreibenden Stellmittel (38) zum Stellen der Sperrmittel (36, 46) in eine offene Position und eine geschlossene Position, wobei im Ruhezustand die Sperrmittel (36, 46) in der geschlossenen Position sind und wobei in einem Brandfall die Stellmittel (38) die Sperrmittel (36, 46) aus der geschlossenen Position in die offene Position verstellen, derart, dass Löschfluid von der Zuleitung (32) in die Ableitung (34) fließt,
**dadurch gekennzeichnet,**
- **dass** die Sperrmittel (36, 46) derart gebildet sind, dass in einem Wartungsbetrieb die Sperrmittel (36, 46) mittels der Stellmittel (38) aus ihrer geschlossenen Position verstellbar sind, derart, dass im Wartungsbetrieb kein Löschfluid von der Zuleitung (32) in die Ableitung (34) fließt.

2. Ventil nach Anspruch 1, **dadurch gekennzeichnet, dass** die Sperrmittel (36, 46) aus einem Kugelhahn (46) gebildet sind, wobei der Kugelhahn (46) zwischen der offenen Position und der geschlossenen Position eine Wartungsposition hat.

3. Ventil nach Anspruch 2, **dadurch gekennzeichnet, dass** der Kugelhahn (46) im Wartungsbetrieb von den Stellmitteln (38) aus der geschlossenen Position in die Wartungsposition verstellbar ist.

4. Ventil nach Anspruch 2 oder 3, **dadurch gekennzeichnet, dass** der Kugelhahn (46) im Wartungsbetrieb von den Stellmitteln (38) um zumindest 50°, vorzugsweise zumindest 90° verstellbar ist.

5. Ventil nach einem der Ansprüche 2 bis 4, **dadurch gekennzeichnet, dass** ein Winkel zwischen einer Einlassöffnung und einer Auslassöffnung des Kugelhahns (46) zwischen 5° und 175°, vorzugsweise 90° ist.

6. Ventil nach einem der Ansprüche 1 bis 5, **dadurch gekennzeichnet, dass** die Sperrmittel (36, 46) eine Berstscheibe (30) und einen Absperrhahn (36) aufweisen.

7. Ventil nach einem der Ansprüche 1 bis 6, **dadurch gekennzeichnet, dass** der Absperrhahn (36) ein Kugelhahn (46) oder ein Magnetventil (36) ist.

8. Ventil nach einem der Ansprüche 1 bis 7, **dadurch gekennzeichnet, dass** die Berstscheibe (30) derart zwischen Zuleitung (32) und Absperrhahn (36) angeordnet ist, dass der Absperrhahn (36) im Ruhezustand trocken ist.

9. Ventil nach einem der Ansprüche 1 bis 8, **dadurch gekennzeichnet, dass** im Brandfall der Fluiddruck derart erhöht wird, dass die Berstscheibe (30) birst.

10. Ventil nach einem der Ansprüche 1 bis 9, **dadurch gekennzeichnet, dass** die Berstscheibe (30) derart zwischen Absperrhahn (36) und Ableitung (34) angeordnet ist, dass der Absperrhahn (36) im Ruhezustand mit Löschfluid beaufschlagt ist.

11. Ventil nach einem der Ansprüche 1 bis 10, **dadurch gekennzeichnet, dass** die Stellmittel (38) hydraulisch, pneumatisch und/oder elektrisch betrieben sind.

12. Ventil nach einem der Ansprüche 1 bis 11, **dadurch gekennzeichnet, dass** die Stellmittel (38) einen Stellmotor aufweisen.

13. Ventil nach einem der Ansprüche 1 bis 12, **dadurch gekennzeichnet, dass** die Position der Stellmittel (38) ermittelnde Sensoren (40) vorgesehen sind.

## Claims

1. Valve for pipelines of fire fighting systems (1),
- with a supply line (32) for extinguishing fluid loaded by excess pressure,
- with a drain line (34) for the extinguishing fluid,
- with locking means (36, 46) arranged between the supply line (32) and the drain line (34), and
- with an actuating means (38) operating the locking means (36, 46) for setting the locking means (36, 46) in an open position and a closed position, wherein, in the rest state, the locking means (36, 46) are in the closed position and wherein, in the case of a fire, the actuating means (38) adjust the locking means (36, 46) from the closed position into the open position in such a way that extinguishing fluid flows from the supply line (32) into the drain line (34),
**characterised in that**
- the locking means (36, 46) are formed in such a way that in a maintenance operation, the locking means (36, 46) can be adjusted from their closed position by means of the actuating means (38) in such a way that, during maintenance operation, no extinguishing fluid flows from the supply line (38) into drain line (34).

2. Valve according to claim 1, **characterised in that** the locking means (36, 46) are formed from a ball valve (46), the ball valve (46) having a maintenance position between the open position and the closed position.

3. Valve according to claim 2, **characterised in that** the ball valve (46) can be adjusted during maintenance operation by the actuating means (38) from the closed position into the maintenance position.

4. Valve according to claim 2 or 3, **characterised in that** the ball valve (46) can be adjusted during maintenance operation by the actuating means (38) by at least 50°, preferably at least 90°.

5. Valve according to any one of claims 2 to 4, **characterised in that** an angle between an inlet opening and an outlet opening of the ball valve (46) is between 5° and 175°, preferably 90°.

6. Valve according to any one of claims 1 to 5, **characterised in that** the locking means (36, 46) have a rupture disc (30) and a shut-off valve (36).

7. Valve according to any one of claims 1 to 6, **characterised in that** the shut-off valve (36) is a ball valve (46) or a solenoid valve (36).

8. Valve according to any one of claims 1 to 7, **characterised in that** the rupture disc (30) is arranged between the supply line (32) and shut-off valve (36) in such a way that the shut-off valve (36) is dry in the rest state.

9. Valve according to any one of claims 1 to 8, **characterised in that** in the case of fire, the fluid pressure is increased in such a way that the rupture disc (30) bursts.

10. Valve according to any one of claims 1 to 9, **characterised in that** the rupture disc (30) is arranged between the shut-off valve (36) and drain line (34) in such a way that the shut-off valve (36) is loaded with extinguishing fluid in the rest state.

11. Valve according to any one of claims 1 to 10, **characterised in that** the actuating means (38) are operated hydraulically, pneumatically and/or electrically.

12. Valve according to any one of claims 1 to 11, **characterised in that** the actuating means (38) have a servomotor.

13. Valve according to any one of claims 1 to 12, **characterised in that** sensors (40) determining the position of the actuating means (38) are provided.

## Revendications

1. Valve pour tuyauteries de systèmes de lutte contre les incendies (1),
- avec une conduite d'entrée (32) pour un fluide d'extinction soumis à une surpression,
- avec une conduite de sortie (34) pour le fluide d'extinction,
- avec des moyens de fermeture (36, 46), disposés entre la conduite d'entrée (32) et la conduite de sortie (34), et
- avec un moyen de positionnement (38), qui commande les moyens de fermeture (36, 46), afin de mettre lesdits moyens de fermeture (36, 46), dans une position ouverte et dans une position fermée, les moyens de fermeture (36, 46), à l'état de repos, étant dans la position fermée et, en cas d'incendie, les moyens de positionnement (38) amenant les moyens de fermeture (36, 46) de la position fermée à la position ouverte, de sorte que le fluide d'extinction coule de la conduite d'entrée (32) dans la conduite de sortie (34), **caractérisée en ce que**
- les moyens de fermeture (36, 46) sont conçus de sorte que, lors de la maintenance, les moyens de fermeture (36, 46) puissent être amenés hors de leur position fermée, par l'intermédiaire des moyens de positionnement (38) bizarre, afin d'empêcher le fluide extincteur de couler de la conduite d'entrée (32) dans la conduite de sortie (34), lors de la maintenance.

2. Valve selon la revendication 1, **caractérisée en ce que** les moyens de fermeture (36, 46) sont formés sur la base d'un robinet à boisseau sphérique (46), ledit robinet à boisseau sphérique (46) présentant une position de maintenance entre la position ouverte et la position fermée.

3. Valve selon la revendication 2, **caractérisée en ce que** le robinet à boisseau sphérique (46), en service de maintenance, peut être amené, à partir de la position fermée, dans la position de maintenance, par l'intermédiaire des moyens de positionnement (38).

4. Valve selon revendication 2 ou 3, **caractérisée en ce que** le robinet à boisseau sphérique (46), en service de maintenance, peut être déplacé d'au moins 50°, de préférence d'au moins 90° par les moyens de positionnement (38).

5. Valve selon l'une des revendications 2 à 4, **caractérisée en ce que** l'angle entre une ouverture d'entrée et une ouverture de sortie du robinet à boisseau sphérique (46) est situé entre 5° et 175°, de préférence 90 °.

6. Valve selon l'une des revendications 1 à 5, **caractérisée en ce que** les moyens de fermeture (36, 46) présentent une membrane de rupture (30) et un robinet de fermeture (36).

7. Valve selon l'une des revendications 1 à 6, **caractérisée en ce que** le robinet de fermeture (36) est un robinet sphérique (46) ou une vanne magnétique (36).

8. Valve selon l'une des revendications 1 à 7, **caractérisée en ce que** la membrane de rupture (30) est disposée entre la conduite d'amenée (32) et le robinet de fermeture (36) de sorte que ledit robinet d'arrêt (36) soit à sec à l'état de repos.

9. Valve selon l'une des revendications 1 à 8, **caractérisée en ce que**, dans un cas d'incendie, la pression du fluide est augmentée de sorte que la membrane de rupture (30) éclate.

10. Valve selon l'une des revendications 1 à 9, **caractérisée en ce que** la membrane de rupture (30) est disposée entre le robinet de fermeture (36) et la conduite de sortie (34) de sorte que ledit robinet de fermeture (36) soit soumis à la pression du fluide d'extinction à l'état de repos.

11. Valve selon l'une des revendications 1 à 10, **caractérisée en ce que** les moyens de positionnement (38) sont à commande hydraulique, pneumatique et / ou électrique.

12. Valve selon l'une des revendications 1 à 11, **caractérisée en ce que** les moyens de positionnement (38) présentent un servomoteur.

13. Valve selon l'une des revendications 1 à 12, **caractérisée en ce que** des détecteurs (40) de la position des moyens de positionnement (38) sont prévus.
